# EUROPEAN PATENT SPECIFICATION

(11) **EP 4 113 263 B1**
(45) Date of publication and mention of the grant of the patent: **24.12.2025**
(21) Application number: 21765069.6
(22) Date of filing: 28.01.2021
(51) Int. Cl.: G06F 3/04812, G06F 3/0486, G06F 3/0488

(54) **SCREENSHOT IMAGE SHARING METHOD, TERMINAL AND STORAGE MEDIUM**
VERFAHREN ZUR GEMEINSAMEN NUTZUNG VON SCREENSHOT-BILDERN, ENDGERÄT UND SPEICHERMEDIUM
PROCÉDÉ DE PARTAGE DE CAPTURE D'ÉCRAN, TERMINAL ET SUPPORT DE STOCKAGE

(30) Priority: 02.03.2020 CN 202010136170
(43) Date of publication of application: 04.01.2023
(73) Proprietor: GUANGDONG OPPO MOBILE TELECOMMUNICATIONS CORP., LTD., Dongguan, Guangdong 523860 (CN)
(72) Inventor: LIU, Yue, Dongguan, Guangdong 523860 (CN)
(74) Representative: Tansini, Elio Fabrizio
(86) International application number: PCT/CN2021/074227
(87) International publication number: WO 2021/175052

(56) References cited:
- CN-A- 105 828 167
- CN-A- 106 489 126
- CN-A- 106 502 527
- CN-A- 106 502 527
- CN-A- 106 527 882
- CN-A- 106 527 883
- CN-A- 108 174 022
- CN-A- 108 509 533
- CN-A- 109 726 179
- CN-A- 111 290 675
- KR-A- 20150 056 346
- US-A1- 2017 090 845
- DANIEL HUBER: "Screenshot Crop & Share - Android App", YOUTUBE, 15 June 2016 (2016-06-15), pages 1, XP054977665, Retrieved from the Internet <URL:https://www.youtube.com/watch?v=DlFfwWKK97U> [retrieved on 20170824]
- ITECHUOUTGUY: "How To: Screenshot With Google Now On Tap", YOUTUBE, 15 December 2015 (2015-12-15), pages 1, XP054977666, Retrieved from the Internet <URL:https://www.youtube.com/watch?v=xixgqYM4HEc> [retrieved on 20170824]

## Description

### TECHNICAL FIELD

Embodiments of the present disclosure relate to the field of human-computer interaction technologies, and in particularly, to a screenshot image sharing method, a terminal and a storage medium.

### BACKGROUND

At present, if a user wants to share a display content in a current display interface of a terminal to another user for viewing, he/she can first take a screenshot of the current display interface of the terminal, and then share a screenshot image.

A sharing process of the screenshot image in the related art is as follows. Specifically, a terminal takes a screenshot of a current display interface to get a screenshot image. A user clicks to select the screenshot image, and then the terminal displays a sharing control. The user triggers the sharing control, the terminal correspondingly displays a list of applications with image sharing function, and then the user selects an application will be for sharing the screenshot image from the list of the applications. Afterwards, the terminal displays a contact list of the selected application, the user selects a shared object in the contact list, and then the terminal sends the screenshot image to the selected shared object.

CN 106502527A discloses a content sharing method and device. In the method, after a screenshot picture is generated and displayed in a previewing mode, it is detected whether a user switches to display a predetermined page of a predetermined application program. When the predetermined page of the predetermined application program is displayed in current operation, it is detected whether the user performs a dragging operation on the displayed preview picture or not. If it is detected that the user performs the dragging operation on the preview picture, the preview picture is moved and displayed according to the dragging operation. If it is detected that the preview picture is moved to a target position of the predetermined page, a sharing operation is performed on the screenshot picture.

### SUMMARY

The present disclosure provides a screenshot image sharing method, a terminal and a storage medium. The invention is set out in the appended set of claims.

### BRIEF DESCRIPTION OF THE DRAWINGS

FIG. 1 illustrates a schematic diagram of an implementation environment according to an embodiment of the present disclosure.
FIG. 2 illustrates a schematic flowchart of a screenshot image sharing method according to an embodiment of the present disclosure.
FIG. 3 illustrates a schematic flowchart of a screenshot image sharing method according to another embodiment of the present disclosure.
FIG. 4 to FIG. 6 illustrate schematic views of interfaces according to the embodiment of FG. 3.
FIG. 7 illustrates a schematic flowchart of a screenshot image sharing method according to still another embodiment of the present disclosure.
FIG. 8 illustrates a schematic view of an interface of saving a screenshot image according to an embodiment of the present disclosure.
FIG. 9 illustrates a schematic view of an interface of deleting a screenshot image according to an embodiment of the present disclosure.
FIG. 10 illustrates a schematic block diagram of a screenshot image sharing device according to an example useful for understanding the invention but outside the scope of the invention as claimed.
FIG. 11 illustrates a schematic block diagram of a terminal according to an embodiment of the present disclosure.

### DETAILED DESCRIPTION OF EMBODIMENTS

In order to make the purposes, technical schemes, and advantages of the present disclosure clearer, embodiments of the present disclosure will be described below in further detail in conjunction with the accompanying drawings.

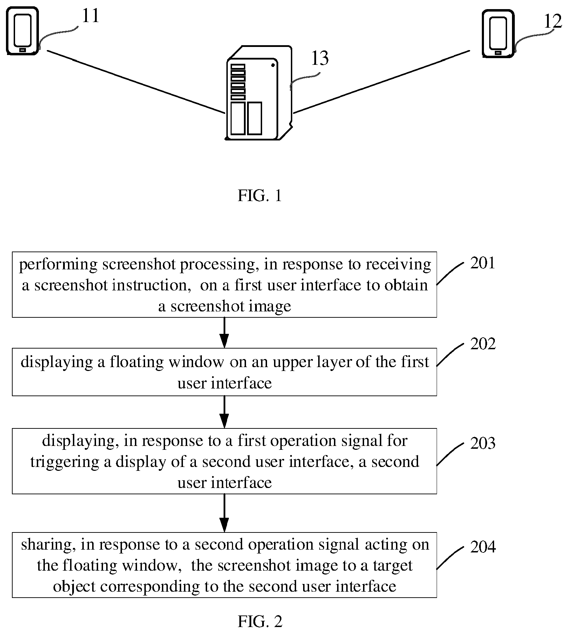

Please refer to FIG. 1, which illustrates an implementation environment according to an embodiment of the present disclosure. The implementation environment may include: a first terminal 11, a second terminal 12, and a background server 13.

The first terminal 11 has a screenshot function and an image sending function. The first terminal 11 can be a smart phone, tablet computer, personal computer, etc. In at least one alternative embodiment, a sender client is installed in the first terminal 11, and the sender client realizes the above image sharing function.

The second terminal 12 has an image receiving function. The second terminal 12 may be a smart phone, tablet computer, personal computer, etc. In at least one alternative embodiment, a receiver client is installed in the second terminal 12, and the receiver client realizes the above image sharing function.

The sender client and the receiver client can be clients with different functions. For example, the sender client has a sending image function and the receiver client has a receiving image function. The above sender client and receiver client can also be clients with the same function. For example, both sender client and receiver client are clients with image sending and receiving function. When one of the clients is used to realize the image sending function, the one of the clients is the sender client; when one of the clients is used to realize the image receiving function, and the one of the clients is the receiver client.

The background server 13 is a background server corresponding to the sender client and the receiver client. The background server 13 can be a server, a server cluster, or a cloud computing service center.

A connection is established between the first terminal 11 and the background server 13 through a wired network or a wireless network. A connection is established between the background server 13 and the second terminal 12 through a wired network or a wireless network.

In the related art, operations required to share a screenshot image to other contacts are cumbersome, and the efficiency of the image sharing is low. Based on this, an embodiment of the present disclosure provides a screen image sharing method, by displaying a screenshot image in a floating window after obtaining the screenshot image by taking a screenshot, a terminal can switch a user interface displaying the screenshot image to be shared, in this process, the floating window is always the top window, the user can drag the floating window to share the screenshot image to other objects, which can reduce operations required to share the screenshot image to the other objects and improve the efficiency of image sharing.

Please refer to FIG. 2, which illustrates a schematic flowchart of a screenshot image sharing method according to an embodiment of the present disclosure, and the screenshot image sharing method is implemented by the first terminal illustrated in FIG. 1. The method begins from block 201 to block 204.

At the block 201, performing screenshot processing, in response to receiving a screenshot instruction, on a first user interface to obtain a screenshot image.

The screenshot instruction is configured to trigger the screenshot processing of the first user interface. The screenshot processing refers to a process of intercepting a user interface (such as the first user interface) and saving it as an image. The first user interface is a user interface displayed when the terminal receives the screenshot instruction, it can be a desktop interface or a user interface of any application in the terminal.

In an illustrated embodiment, when the terminal receives a call out instruction of a function interface, the function interface is displayed, which includes a screenshot function control. If the terminal receives a trigger signal acting on the screenshot function control, the terminal takes the trigger signal as the screenshot instruction. In another illustrated embodiment, if the terminal receives a specified operation signal, the terminal receives the screenshot instruction. In at least one alternative embodiment, the above specified operation signal is a multi-finger touch operation signal, that is, an operation signal generated by multiple fingers touching a terminal screen. In the embodiment of the present disclosure, only the specified operation signal is a three-finger slide signal as an example.

At the block 202, displaying a floating window on an upper layer of the first user interface.

After receiving the screenshot image, the terminal displays the floating window on the upper layer of the first user interface, the floating window is configured to display the screenshot image.

In order to avoid the floating window blocking the user interface currently displayed on the terminal, a size of the floating window is usually small. In at least one alternative embodiment, after obtaining the screenshot image, the terminal reduces a size of the screenshot image to obtain a thumbnail image of the screenshot image, and the floating window is configured to display the thumbnail image of the screenshot image.

At the block 203, displaying, in response to a first operation signal for triggering a display of a second user interface, a second user interface.

The second user interface is an interface selected by the user for sharing the screenshot image, which can be a conversation interface with a target contact, a group conversation interface of a target group, or a content display interface.

The conversation interface with the target contact is configured for a local account to talk with a target contact. The target contact can be any contact associated with the local account, which can be selected by the user. The local account refers to a user account logged in a client in a terminal. An association relationship between the local account and the target contact can be any one of friend relationship, follow relationship and listening relationship. The group conversation interface of the target group is configured for the local account to talk with other contact in the target group.

The target group can be any group with at least two user accounts, and the above at least two user accounts include the local account. The content display interface is configured to display at least one of social content issued by a contact associated with the local account and social content issued by the local account. The above social content includes but is not limited to pictures, words, videos, music, Web links, etc.

At the block 204, sharing, in response to a second operation signal acting on the floating window, the screenshot image to a target object corresponding to the second user interface.

The second operation signal can be any one of long press operation signals, click operation signals, double click operation signals, slide operation signals, and drag operation signals. In the embodiment of the present disclosure, only the second operation signal is the drag operation signal as an example.

The target object corresponding to the second user interface can be actually determined according to a type of the second user interface. In an alternative embodiment, the second user interface is the conversation interface with the target contact, and the target object is the target contact. In another alternative embodiment, the second user interface is the group conversation interface of the target group, and the target object is other contact in the target group except the local account. In another alternative embodiment, the second user interface is a social information sharing interface, and the target object can be all or part of the contacts associated with the local account, and the above part of the contacts can be customized by the terminal user.

In an alternative embodiment, when the second user interface is the conversation interface with the target contact or the group conversation interface of the target group, the terminal can select an application and a target object to which the second user interface belongs based on the second operation signal, and then select confirmation sending. The terminal sends the screenshot image to a background server corresponding to the application to which the second user interface belongs, the background server transmits the screenshot image to the above target object. It should be noted that the selecting the application to which the second user interface belongs, the target object and selecting the confirmation sending are all completed in the background.

In another alternative embodiment, when the second user interface is a first content display interface, the sharing the screenshot image to the target object corresponding to the second user interface can be realized as: displaying a social content editing interface; when receiving a content publishing instruction, sending target social content to the target server.

The first content display interface is configured to display at least one of social content issued by the local account and social content issued by a contact associated with the local account. The social content editing interface is configured for the terminal user to edit the social content. In the embodiment of the present disclosure, the social content editing interface includes the screenshot image. The content publishing instruction is configured to trigger the terminal to publish the target social content. The target server is a background server corresponding to the application to which the second user interface belongs. The target server is configured to transmit the target social content to the target client. The target client is configured to display the target social content in a second content display interface. The target social content includes the screenshot image. In at least one alternative embodiment, the target social content may further include other content edited by the terminal user, such as text, facial expressions, and so on.

To sum up, the technical scheme provided by the embodiment of the disclosure present is to display a screenshot image in a floating window after obtaining the screenshot image by the screenshot processing, a terminal switches a user interface displaying the screenshot image to be shared, in this process, the floating window is always the top window, the user drags the floating window to share the screenshot image to other objects, which can reduce operations required to share the screenshot image to the other objects and improve the efficiency of image sharing.

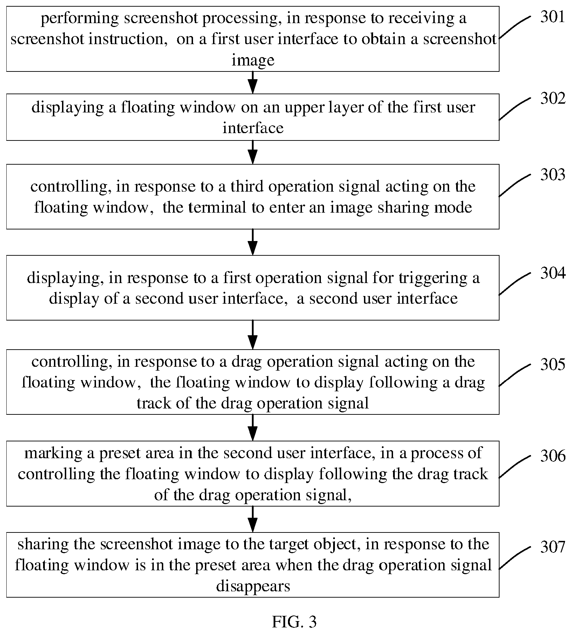

Please refer to FIG. 3, which illustrates a schematic flowchart of a screenshot image sharing method according to an embodiment of the present disclosure. The method begins from block 301 to block 307.

At the block 301, performing screenshot processing, in response to receiving a screenshot instruction, on a first user interface to obtain a screenshot image.

At the block 302, displaying a floating window on an upper layer of the first user interface.

The floating window is configured to display the screenshot image.

At the block 303, controlling, in response to a third operation signal acting on the floating window, the terminal to enter an image sharing mode.

The third operation signal can be any one of click operation signals, double click operation signals, slide operation signals, long press operation signals and drag operation signals. In the embodiment of the present disclosure, only the third operation signal is the drag operation signal as an example.

The terminal enters the image sharing mode based on the third operation signal. In this mode, the floating window is always in the focus state, that is, the floating window is always the top window. In at least one alternative embodiment, the terminal sets a property WS_EX_NOACTIVATE for the floating window, based on the property WS_EX_NOACTIVATE, enables the floating window to maintain the focus state all the time in the image sharing mode.

In at least one alternative embodiment, when the terminal is in the image sharing mode, the floating window is in a preset position in the terminal, and the preset position can be set by the terminal by default or customized by the user. In the embodiment of the present disclosure, when the terminal receives the drag operation signal acting on the floating window, when the drag operation signal disappears, if a drag track of the drag operation signal is greater than a first length, the terminal enters the image sharing mode. At this time, the floating window is fixed at the preset position in the terminal and always maintained in the focus state.

It should be noted that when the floating window maintains the focus state, the floating window is always the top window. On the premise that the user can always interact with the floating window, the terminal can perform other operations based on operation signals triggered by the user, such as switching the display user interface, performing screenshot processing, etc.

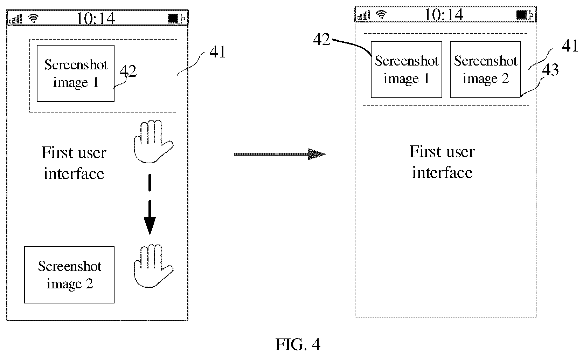

Referring to FIG. 4, which illustrates a schematic view of an interface of sharing the screenshot image according to an embodiment of the present disclosure. A terminal displays a first floating window 42 configured to display a screenshot image 1 at a preset position 41. The terminal receives a three-finger slide operation signal acting on a current display interface, and then the terminal performs screenshot processing on the current display interface to obtain a screenshot image 2, and displays a second floating window 43 configured to display the screenshot image 2 at the preset position 41. It is notable that, the illustration of one screenshot image and one corresponding floating window as well as the sharing of one screenshot image are just an example useful for understanding the invention but outside the scope of the invention as claimed.

At the block 304, displaying, in response to a first operation signal for triggering a display of a second user interface, a second user interface.

In a process of switching the first user interface to the second user interface, the floating window is a top window.

At the block 305, controlling, in response to a drag operation signal acting on the floating window, the floating window to display following a drag track of the drag operation signal.

In the embodiment of the present application, the second operation signal is the drag operation signal. When the terminal is in the image sharing mode, if it receives the drag operation signal acting on the floating window, it will control the floating window to display following the drag track of the drag operation signal.

In at least one embodiment, before receiving the drag operation signal, the terminal first receives a selecting signal corresponding to the screenshot image to be shared. When there are a plurality of screenshot images, the terminal receives a selecting signal of at least two screenshot images from the plurality of screenshot images, in this case, when the terminal receives the drag operation signal of any selected floating window, the selected floating windows are displayed following the drag track of the drag operation signal.

At the block 306, marking a preset area in the second user interface, in a process of controlling the floating window to display following the drag track of the drag operation signal.

The above preset area refers to an area where the sharing operation takes effect, which can be set by the terminal by default or customized by the user. In at least one alternative embodiment, when the drag track of the drag operation signal exceeds a second length, the terminal displays a sharing icon on the second user interface, and the preset area refers to the area including the sharing icon. For example, the preset area is a rectangular area or a circular area centered on the shared icon, and the size of the rectangular area or the circular area is not limited in the embodiment of the present disclosure.

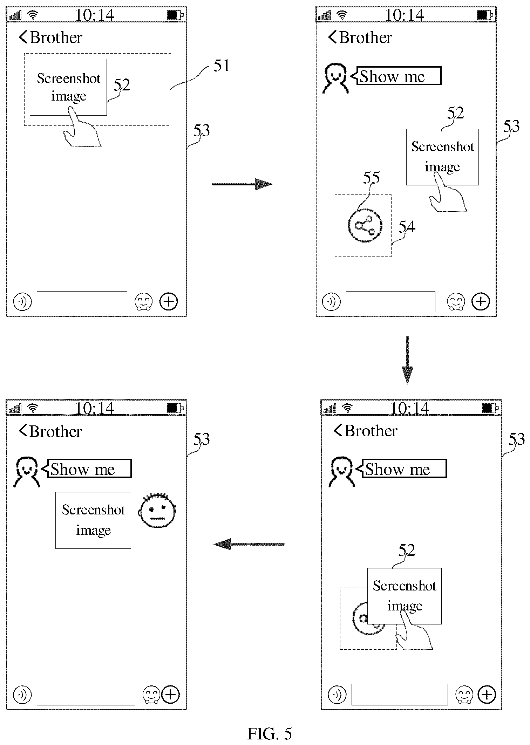

Referring to FIG. 5, which illustrates a schematic view of an interface of sharing the screenshot image according to an embodiment of the present disclosure. The terminal displays the floating window 52 for displaying the screenshot image at the preset position 51. The terminal receives the drag operation signal acting on the floating window 52. During the drag process, the terminal displays the preset area 54 on the second user interface 53, the preset area 54 includes the sharing icon 55.

At the block 307, sharing the screenshot image to the target object, in response to the floating window is in the preset area when the drag operation signal disappears.

In the embodiment of the present disclosure, when the drag operation signal disappears, if the floating window is in the preset area, the screenshot image is shared to the target object. Referring to FIG. 5, when the drag operation signal disappears, if the floating window 52 is in the preset area 54, the screenshot image is shared to the target object.

In at least one alternative embodiment, after sharing the screenshot image to the target object, the terminal still displays the floating window at the preset position, the floating window includes the shared screenshot image. The terminal can switch to other user interface according to the user's operation signal, and continue to share the screenshot image based on the drag operation signal corresponding to the floating window, so as to realize multiple sharing of the screenshot image across applications, users and groups, further improve the efficiency of image sharing.

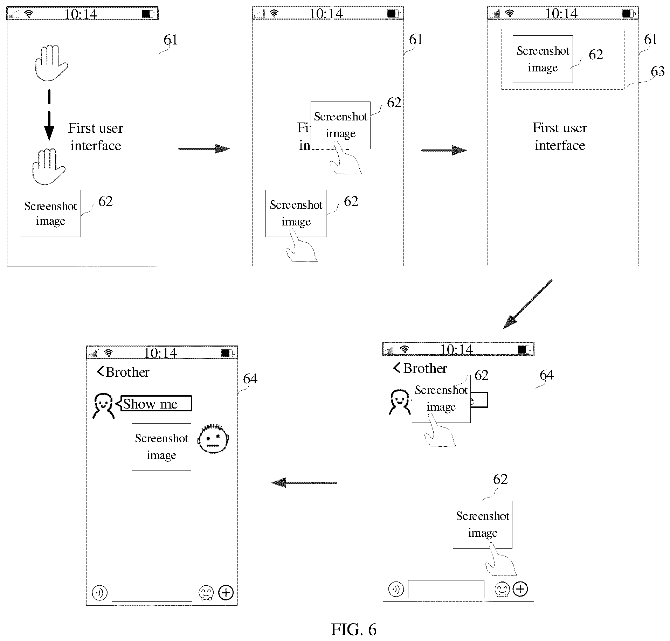

Referring to FIG. 6, which illustrates a schematic view of an interface of sharing the screenshot image according to an embodiment of the present disclosure. The terminal displays a first user interface 61, and a user performs a three-finger slide operation on the first user interface 61. The terminal performs screenshot processing on the first user interface 61 to obtain a screenshot image, and displays the screenshot image in the floating window 62. When the terminal receives a drag operation signal corresponding to the floating window 62, the terminal enters an image sharing mode, and the terminal displays the floating window 62 at the preset position 63, the terminal switches and displays the second user interface 64 based on the operation signal triggered by the user. When receiving the drag operation signal corresponding to the floating window 62, the terminal shares the screenshot image to the target object corresponding to the second user interface 64.

To sum up, the technical scheme provided by the embodiment of the present disclosure is to display the screenshot image in the floating window after obtaining the screenshot image by taking a screenshot, a terminal switches a user interface displaying the screenshot image to be shared, in this process, the floating window is always the top window, the user drags the floating window to share the screenshot image to other objects, which can reduce operations required to share the screenshot image to the other objects and improve the efficiency of image sharing.

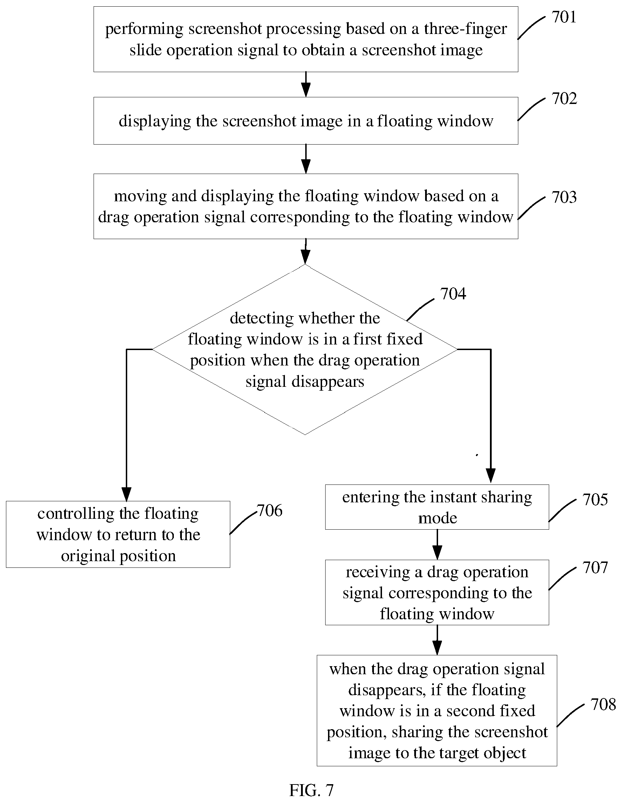

In at least one alternative embodiment, with reference to FIG. 7, which illustrates a schematic flowchart of a screenshot image sharing method according to an embodiment of the present disclosure. The method may begin from block 701 to block 708.

At the block 701, performing screenshot processing based on a three-finger slide operation signal to obtain a screenshot image.

At the block 702, displaying the screenshot image in a floating window.

At the block 703, moving and displaying the floating window based on a drag operation signal corresponding to the floating window.

At the block 704, detecting whether the floating window is in a first fixed position when the drag operation signal disappears.

If the floating window is in the first fixed position when the drag operation signal disappears, entering an image sharing mode. If the floating window is not in the first fixed position when the drag operation signal disappears, the floating window returns to an original position.

At the block 705, entering the instant sharing mode.

At the block 706, controlling the floating window to return to the original position.

At the block 707, receiving a drag operation signal corresponding to the floating window.

At the block 708, when the drag operation signal disappears, if the floating window is in a second fixed position, sharing the screenshot image to the target object.

When the drag operation signal disappears, if the floating window is not in the second fixed position, the sharing the screenshot image to the target object is not performed.

In at least one alternative embodiment, after the terminal displays the screenshot image in the floating window, it can save or share the screenshot image through shortcut operations of the floating window.

In an alternative embodiment provided based on the embodiment illustrated in FIG. 2 or FIG. 4, after the floating window is displayed on the upper layer of the first user interface, the screenshot image sharing method further include: saving the screenshot image in response to a fourth operation signal acting on the floating window.

The fourth operation signal can be any one of click operation signals, double click operation signals, slide operation signals, long press operation signals and drag operation signals. In the embodiment of the present disclosure, only the fourth operation signal is the slide operation signal as an example.

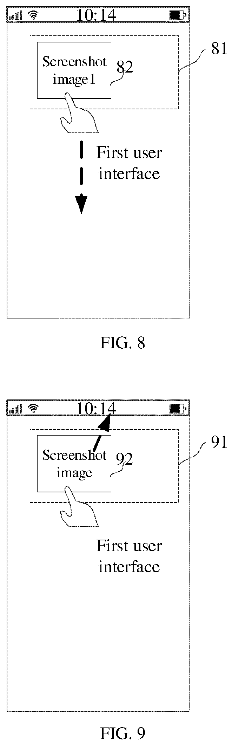

After the terminal saves the screenshot image, the user can view the screenshot image in a photo album. Referring to FIG. 8, which illustrates a schematic view of an interface of saving a screenshot image according to an embodiment of the present disclosure. The terminal displays the floating window 82 at the preset position 81, the floating window is configured to display the screenshot image. When the terminal receives a downward slide operation signal corresponding to the floating window 82, it saves the screenshot image.

In an alternative embodiment provided based on the embodiment illustrated in FIG. 3 or FIG. 5, after the floating window is displayed on the upper layer of the first user interface, the screenshot image sharing method may further include: deleting the screenshot image in response to a fifth operation signal acting on the floating window.

The fifth operation signal can be any one of click operation signals, double click operation signals, slide operation signals, long press operation signals and drag operation signals. In the embodiment of the present disclosure, only the fifth operation signal is the slide operation signal as an example. It should be noted that the fourth operation signal and the fifth operation signal are slide operation signals with different directions. For example, the fourth operation signal is an operation signal with a sliding direction upward, and the fifth operation signal is an operation signal with a sliding direction downward.

It should be noted that when there is no floating window at the preset position, the terminal exits the image sharing mode.

Referring to FIG. 9, which illustrates a schematic view of an interface of deleting a screenshot image according to an embodiment of the present disclosure. The terminal displays the floating window 92 at the preset position 91, the floating window is configured to display the screenshot image. When the terminal receives an upward slide operation signal corresponding to the floating window 92, the screenshot image is deleted.

To sum up, the technical scheme provided by the embodiment of the present disclosure is to save the screenshot image through the downward slide operation signal of the floating window and delete the screenshot image through the upward slide operation signal of the floating window, which realizes the saving or deleting of the screenshot image through the quick operation of the floating window and improves the operation efficiency.

The following is a device according to an example useful for understanding the invention but outside the scope of the invention as claimed. For the part not described in detail in the embodiment of the device, it can refer to the technical details disclosed in the above method embodiments.

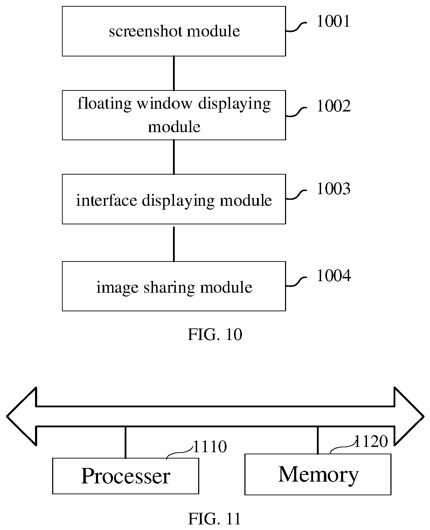

Please refer to FIG. 10, which illustrates a schematic block diagram of a screenshot image sharing device according to an embodiment of the present disclosure. The screenshot image sharing device can be realized as all or part of the terminal through software, hardware or a combination of the software and hardware. The screenshot sharing device may include: a screenshot module 1001, a floating window displaying module 1002, an interface displaying module 1003, and an image sharing module 1004.

The screenshot module 1001 is configured to perform screenshot processing, in response to receiving a screenshot instruction, on a first user interface to obtain a screenshot image.

The floating window displaying module 1002 is configured to display a floating window on an upper layer of the first user interface, and the floating window being configured to display the screenshot image.

The interface displaying module 1003 is configured to display, in response to a first operation signal for triggering a display of a second user interface, a second user interface, and the floating window being a top window in a process of switching the first user interface to the second user interface.

The image sharing module 1004 is configured to share, in response to a second operation signal acting on the floating window, the screenshot image to a target object corresponding to the second user interface.

To sum up, the technical scheme provided by the embodiment of the disclosure present is to display a screenshot image in a floating window after obtaining the screenshot image by taking a screenshot, a terminal can switch a user interface displaying the screenshot image to be shared, in this process, the floating window is always the top window, the user can drag the floating window to share the screenshot image to other objects, which can reduce operations required to share the screenshot image to the other objects and improve the efficiency of image sharing.

In an alternative embodiment provided based on the embodiment illustrated in FIG. 10, the second operation signal is a drag operation signal; and the image sharing module 1004 is configured to:
control the floating window to display following a drag track of the drag operation signal; and
share the screenshot image to the target object, in response to the floating window is in a preset area when the drag operation signal disappears.

In at least one alternative embodiment, the image sharing module 1004 is further configured to:
mark the preset area in the second user interface, in a process of controlling the floating window to display following the drag track of the drag operation signal.

In at least one alternative embodiment, the image sharing module 1004 is configured to:
in response to the drag track of the drag operation signal is greater than a second length, display a sharing icon on the second user interface, and the preset area referring to an area containing the sharing icon.

In at least one alternative embodiment provided based on the embodiment illustrated in FIG. 10, the device further includes a mode controlling module (not illustrated in FIG. 10).

The mode controlling module is configured to control, in response to a third operation signal acting on the floating window, the terminal to enter an image sharing mode, and when the terminal is in the image sharing mode, the floating window being in a focus state.

In at least one alternative embodiment provided based on the embodiment illustrated in FIG. 10, the second user interface is a first content display interface, the first content display interface is configured to display at least one of social content issued by a local account and social content issued by a contact associated with the local account, and the local account is a user account currently logged in a client to which the second user interface belongs.

The image sharing module 1004 is configured to:
display a social content editing interface, and the social content editing interface including the screenshot image; and
send, in response to receiving a content publishing instruction, target social content to a target server, the target server being configured to transmit the target social content to a target client, the target client being configured to display the target social content on a second content display interface, and the target social content comprising the screenshot image.

In at least one alternative embodiment provided based on the embodiment illustrated in FIG. 10, the device further includes an image storing module (not illustrated in FIG. 10).

The image storing module is configured to save the screenshot image, in response to a fourth operation signal acting on the floating window.

In at least one alternative embodiment provided based on the embodiment illustrated in FIG. 10, the device further includes an image deleting module (not illustrated in FIG. 10).

The image deleting module is configured to delete the screenshot image, in response to a fifth operation signal acting on the floating window.

In at least one alternative embodiment provided based on the embodiment illustrated in FIG. 10, the floating window displaying module 1002 is further configured to display the floating window at a preset position, and the floating window includes the shared screenshot image.

It should be noted that when the device provided by the above embodiment realizes its functions, only the division of the above-mentioned functional modules is illustrated. In practical application, the above-mentioned functions can be allocated by different functional modules according to needs, that is, the internal structure of the device is divided into different functional modules to complete all or part of the functions described above. In addition, the device provided by the above embodiment and the method embodiment belong to the same concept, and the specific implementation process is detailed in the method embodiment, which will not be repeated here.

Please refer to FIG. 11, which illustrates a schematic block diagram of a terminal according to an embodiment of the present disclosure. The terminal of the disclosure includes one or more components: a processer 1110 and a memory 1120.

The processor 1110 may include one or more processing cores. The processor 1110 uses various interfaces and lines to connect to various parts of the entire terminal, and executes various functions of the terminal and processes data by running or executing instructions, programs, code sets or instruction sets stored in the memory 1120 and retrieving data stored in the memory 1120. In at least one illustrated embodiment, the processor 1110 may be implemented by at least one hardware form of a Digital Signal Processing (DSP), a Field-Programmable Gate Array (FPGA) and a Programmable Logic Array (PLA). The processor 110 may be integrated with one or any combination of a Central Processing Unit (CPU) and a modem. The CPU mainly processes an operating system, applications and so on. The modem is configured to process wireless communication. It can be understood that the above modem may not be integrated into the processor 1110, but may be implemented by a chip alone.

**In** at least one embodiment, the processor 1110 is configured to, when the program instructions stored in the memory 1120 executed by the processer 1110, implement the screenshot image sharing method provided by the above method embodiments.

The memory 1120 may include a Random-Access Memory (RAM) or may include a Read-Only Memory. In at least one alternative embodiment, the memory 1120 may include a non-transitory computer-readable storage medium. The memory 1120 may be configured to store instructions, programs, codes, code sets, or instruction sets. The memory 1120 may include a program storage region and a data storage region. The program storage region may store instructions for implementing the operating system, instructions for at least one function, instructions used to implement the following method embodiments, etc. The data storage region can store data created by the terminal in use.

The structure of the above terminal is only schematic. In actual implementation, the terminal can include more or less components, such as camera, etc., which is not limited in this embodiment.

Those skilled in the art can understand that the structure illustrated in FIG. 11 does not constitute a limitation on the terminal 1100, and may include more or fewer components than illustrated in the figure, or combine some components, or adopt different component arrangements.

**In** at least one embodiment, a computer-readable storage medium is provided, the computer-readable storage medium is stored with at least one instruction, and the at least one instruction is loaded and executed by the processor of the terminal to realize the screenshot image sharing method in the above method embodiment.

In at least one alternative embodiment, the computer-readable storage medium may be a hard disk, or a Read Only Memory (ROM), a Read Access Memory (RAM), magnetic tape, floppy disk, optical data storage device, etc.

In at least one alternative embodiment, a computer program product is provided according to an example useful for understanding the invention but outside the scope of the invention as claimed, which is used to realize the screenshot image sharing method provided in the above method embodiment when the computer program product is executed.

It should be understood that "multiple" mentioned in this article refers to two or more. "And/or" describes an association relationship of associated objects, indicating that there can be three kinds of relationships, for example, A and/or B, which can indicate that there are three situations: A alone, A and B at the same time, and B alone. The character "/" generally indicates that the front and rear associated objects are an "or" relationship. The words "first", "second" and similar words used in this article do not mean any order, amount or importance, but are only used to distinguish different components.

The above serial numbers of the embodiments of the present disclosure are only for description and does not represent the advantages and disadvantages of the embodiments.

The above are only exemplary embodiments of present disclosure and are not intended to limit the present disclosure.

## Claims

1. A screenshot image sharing method, comprising:
performing (201, 301, 701) screenshot processing, in response to receiving a screenshot operation, on a first user interface of a terminal, and obtaining a plurality of screenshot images;
displaying (202, 302, 702) a plurality of floating windows (42, 43) on an upper layer of the first user interface, and wherein the plurality of floating windows displays the plurality of screenshot images respectively;
switching (203, 304), in response to a first operation for triggering a display of a second user interface, the first user interface to the second user interface, and the plurality of floating windows being displayed during a process of switching the first user interface to the second user interface;
in response to receiving a selecting signal for at least two of the plurality of screenshot images displayed in the plurality of floating windows, obtaining at least two selected floating windows from the plurality of floating windows;
in response to receiving a drag operation on the at least two selected floating windows, controlling the at least two selected floating windows to move following a drag track of the drag operation (305, 707); and
sharing (204, 307, 708), in response to the drag operation ending, the at least two screenshot images to a target object corresponding to the second user interface.

2. The method according to claim 1, wherein the sharing (204, 307, 708), in response to the drag operation ending, the at least two screenshot images to a target object corresponding to the second user interface, comprises:
sharing the at least two screenshot images to the target object, in response to the at least two floating windows are in a first area (54) when the drag operation ends,

3. The method according to claim 2, further comprising:
marking (S306) the first area (54) in the second user interface, in a process of controlling the at least two floating windows to move following the drag track of the drag operation.

4. The method according to claim 3, wherein the marking (S306) the first area in the second user interface, comprises:
displaying, in response to the drag track of the drag operation is greater than a second length, a sharing icon (55) on the second user interface, wherein the first area refers to an area containing the sharing icon.

5. The method according to any one of claims 1-4, wherein after the displaying (S202, S302, S702) a plurality of floating windows on an upper layer of the first user interface, the method further comprises:
controlling (303, 703, 705), in response to a third operation acting on the plurality of floating windows, the terminal to enter an image sharing mode, and the plurality of floating windows being in a focus state when the terminal is in the image sharing mode.

6. The method according to claim 5, wherein the third operation is a further drag operation, and the controlling (303, 703, 705), in response to the third operation acting on the plurality of floating windows, the terminal to enter an image sharing mode, comprises:
controlling the terminal to enter the image sharing mode, in response to the plurality of floating windows being moved, based on the further drag operation, to a first fixed position when the further drag operation ends.

7. The method according to claim 6, wherein the method further comprises:
in response to the plurality of floating windows being not moved, based on the further drag operation, to the first fixed position when the further drag operation ends, returning the plurality of floating windows to an original positior (706)

8. The method according to any one of claims 1-7, wherein the method further comprises:
in response to detecting a multi-finger touch operation signal, determining that the screenshot operation is received.

9. The method according to any one of claims 1-8, wherein the second user interface is a first content display interface, the first content display interface is configured to display at least one of social content issued by a local account and social content issued by a contact associated with the local account, and the local account is a user account currently logged in a client to which the second user interface belongs;
wherein the sharing (204, 307, 708) the at least two screenshot images to a target object corresponding to the second user interface, comprises:
displaying a social content editing interface, and the social content editing interface comprising the at least two screenshot images; and
sending, in response to receiving a content publishing operation, target social content to a target server, the target server being configured to transmit the target social content to a target client, the target client being configured to display the target social content on a second content display interface, and the target social content comprising the at least two screenshot images.

10. The method according to any one of claims 1-9, wherein after the displaying (202, 302, 702) a plurality of floating windows on an upper layer of the first user interface, the method further comprises:
saving at least one of the plurality of screenshot images in response to a fourth operation acting on the at least one of the plurality of floating windows, wherein the fourth operation is a downward slide operation.

11. The method according to any one of claims 1-9, wherein after the displaying (202, 302, 702) a plurality of floating windows on an upper layer of the first user interface, the method further comprises:
deleting at least one of the plurality of screenshot images in response to a fifth operation acting on the at least one of the plurality of floating windows, wherein the fifth operation is an upward slide operation.

12. The method according to any one of claims 1-9, wherein after the sharing (204, 307, 708) the plurality of screenshot images to a target object corresponding to the second user interface, the method further comprises:
displaying the plurality of floating windows at a first position, and the plurality of floating windows comprising the plurality of shared screenshot images.

13. The method according to any one of claims 1-12, wherein the displaying the screenshot image in the floating window, comprises:
reducing a size of each of the plurality of screenshot images to obtain a plurality of thumbnail images of the plurality of screenshot images; and
displaying the plurality of thumbnail images of the plurality of screenshot images in the plurality of floating windows respectively.

14. A terminal comprising: a processor (1110) and a memory (1120); wherein the memory (1120) is stored with at least one instruction, and the processor (1110) is configured to, when the at least one instruction is loaded and executed by the processor (1110), implement the screenshot image sharing method according to any one of claims 1-13.

15. A computer-readable storage medium stored with at least one instruction therein, wherein the at least one instruction is configured to be loaded and executed by a processor to implement the screenshot image sharing method according to any one of claims 1-13.

## Patentansprüche

1. Verfahren zum Teilen von Bildschirmaufnahmebildern, umfassend:
Durchführen (201, 301, 701) einer Bildschirmaufnahmeverarbeitung als Reaktion auf Empfangen eines Bildschirmaufnahmevorgangs auf einer ersten Benutzerschnittstelle eines Endgeräts, und Erhalten einer Mehrzahl von Bildschirmaufnahmebildern;
Anzeigen (202, 302, 702) einer Mehrzahl von unverankerten Fenstern (42, 43) auf einer oberen Ebene der ersten Benutzerschnittstelle, und wobei die Mehrzahl von unverankerten Fenstern jeweils die Mehrzahl von Bildschirmaufnahmebildern anzeigt;
Umschalten (203, 304), als Reaktion auf einen ersten Vorgang zum Auslösen einer Anzeige einer zweiten Benutzerschnittstelle, der ersten Benutzerschnittstelle zu der zweiten Benutzerschnittstelle, und wobei die Mehrzahl von unverankerten Fenstern während eines Prozesses eines Umschaltens der ersten Benutzerschnittstelle zu der zweiten Benutzerschnittstelle angezeigt wird;
als Reaktion auf Empfangen eines Auswahlsignals für mindestens zwei der Mehrzahl von Bildschirmaufnahmebildern, die in der Mehrzahl von unverankerten Fenstern angezeigt wird, Erhalten von mindestens zwei ausgewählten unverankerten Fenstern aus der Mehrzahl von unverankerten Fenstern;
als Reaktion auf Empfangen eines Ziehvorgangs auf den mindestens zwei ausgewählten unverankerten Fenstern, Steuern der mindestens zwei ausgewählten unverankerten Fenster so, dass sie sich einer Ziehspur des Ziehvorgangs (305, 707) folgend bewegen; und
Teilen (204, 307, 708), als Reaktion auf ein Ende des Ziehvorgangs, der mindestens zwei Bildschirmaufnahmebilder mit einem Zielobjekt, das der zweiten Benutzerschnittstelle entspricht.

2. Verfahren nach Anspruch 1, wobei das Teilen (204, 307, 708), als Reaktion auf ein Ende des Ziehvorgangs, der mindestens zwei Bildschirmaufnahmebilder mit einem Zielobjekt, das der zweiten Benutzerschnittstelle entspricht, Folgendes umfasst:
Teilen der mindestens zwei Bildschirmaufnahmebilder mit dem Zielobjekt als Reaktion darauf, dass sich die mindestens zwei unverankerten Fenster in einem ersten Bereich (54) befinden, wenn der Ziehvorgang endet.

3. Verfahren nach Anspruch 2, ferner umfassend:
Markieren (S306) des ersten Bereichs (54) in der zweiten Benutzerschnittstelle in einem Prozess eines Steuerns der mindestens zwei unverankerten Fenster so, dass sie sich der Ziehspur des Ziehvorgangs folgend bewegen.

4. Verfahren nach Anspruch 3, wobei das Markieren (S306) des ersten Bereichs in der zweiten Benutzerschnittstelle Folgendes umfasst:
Anzeigen, als Reaktion darauf, dass die Ziehspur des Ziehvorgangs größer als eine zweite Länge ist, eines Teilensymbols (55) auf der zweiten Benutzerschnittstelle, wobei sich der erste Bereich auf einen Bereich bezieht, der das Teilensymbol enthält.

5. Verfahren nach einem der Ansprüche 1-4, wobei nach dem Anzeigen (S202, S302, S702) einer Mehrzahl von unverankerten Fenstern auf einer oberen Ebene der ersten Benutzerschnittstelle das Verfahren ferner Folgendes umfasst:
Steuern (303, 703, 705), als Reaktion auf einen dritten Vorgang, der auf die Mehrzahl von unverankerten Fenstern einwirkt, des Endgeräts so, dass es in einen Bildteilmodus eintritt, und wobei sich die Mehrzahl von unverankerten Fenstern in einem Fokuszustand befindet, wenn sich das Endgerät in dem Bildteilmodus befindet.

6. Verfahren nach Anspruch 5, wobei der dritte Vorgang ein weiterer Ziehvorgang ist, und wobei das Steuern (303, 703, 705), als Reaktion auf den dritten Vorgang, der auf die Mehrzahl von unverankerten Fenstern einwirkt, des Endgeräts so, dass es in einen Bildteilmodus eintritt, Folgendes umfasst:
Steuern des Endgeräts so, dass es in den Bildteilmodus eintritt, als Reaktion darauf, dass die Mehrzahl von unverankerten Fenstern basierend auf einem weiteren Ziehvorgang zu einer ersten fixierten Position bewegt wird, wenn der weitere Ziehvorgang endet.

7. Verfahren nach Anspruch 6, wobei das Verfahren ferner Folgendes umfasst:
als Reaktion darauf, dass die Mehrzahl von unverankerten Fenstern nicht basierend auf dem weiteren Ziehvorgang zu der ersten fixierten Position bewegt wird, wenn der weitere Ziehvorgang endet, Rückführen der Mehrzahl von unverankerten Fenstern zu einer Ausgangsposition (706).

8. Verfahren nach einem der Ansprüche 1-7, wobei das Verfahren ferner Folgendes umfasst:
als Reaktion auf ein Detektieren eines Mehrfinger-Berührungsvorgangssignals, Bestimmen, dass der Bildschirmaufnahmevorgang empfangen wird.

9. Verfahren nach einem der Ansprüche 1-8, wobei die zweite Benutzerschnittstelle eine erste Inhaltsanzeigeschnittstelle ist, wobei die erste Inhaltsanzeigeschnittstelle dazu konfiguriert ist, mindestens eines von durch ein lokales Konto ausgegebenem sozialen Inhalt und durch einen mit dem lokalen Konto verknüpften Kontakt ausgegebenem sozialen Inhalt anzuzeigen, und wobei das lokale Konto ein Benutzerkonto ist, das derzeit bei einem Client angemeldet ist, zu dem die zweite Benutzerschnittstelle gehört;
wobei das Teilen (204, 307, 708) der mindestens zwei Bildschirmaufnahmebilder mit einem Zielobjekt, das der zweiten Benutzerschnittstelle entspricht, Folgendes umfasst:
Anzeigen einer Bearbeitungsschnittstelle für sozialen Inhalt, und wobei die Bearbeitungsschnittstelle für sozialen Inhalt die mindestens zwei Bildschirmaufnahmebilder umfasst; und
Senden, als Reaktion auf Empfangen eines Inhaltsveröffentlichungsvorgangs, von sozialem Zielinhalt an einen Zielserver, wobei der Zielserver dazu konfiguriert ist, den sozialen Zielinhalt an einen Zielclient zu übertragen, wobei der Zielclient dazu konfiguriert ist, den sozialen Zielinhalt auf einer zweiten Inhaltsanzeigeschnittstelle anzuzeigen, und wobei der soziale Zielinhalt die mindestens zwei Bildschirmaufnahmebilder umfasst.

10. Verfahren nach einem der Ansprüche 1-9, wobei nach dem Anzeigen (202, 302, 702) einer Mehrzahl von unverankerten Fenstern auf einer oberen Ebene der ersten Benutzerschnittstelle das Verfahren ferner Folgendes umfasst:
Speichern mindestens eines der Mehrzahl von Bildschirmaufnahmebildern als Reaktion auf einen vierten Vorgang, der auf das mindestens eine der Mehrzahl von unverankerten Fenstern einwirkt, wobei der vierte Vorgang ein Vorgang eines Wischens nach unten ist.

11. Verfahren nach einem der Ansprüche 1-9, wobei nach dem Anzeigen (202, 302, 702) einer Mehrzahl von unverankerten Fenstern auf einer oberen Ebene der ersten Benutzerschnittstelle das Verfahren ferner Folgendes umfasst:
Löschen mindestens eines der Mehrzahl von Bildschirmaufnahmebildern als Reaktion auf einen fünften Vorgang, der auf das mindestens eine der Mehrzahl von unverankerten Fenstern einwirkt, wobei der fünfte Vorgang ein Vorgang eines Wischens nach oben ist.

12. Verfahren nach einem der Ansprüche 1-9, wobei nach dem Teilen (204, 307, 708) der Mehrzahl von Bildschirmaufnahmebildern mit einem Zielobjekt, das der zweiten Benutzerschnittstelle entspricht, das Verfahren ferner Folgendes umfasst:
Anzeigen der Mehrzahl von unverankerten Fenstern an einer ersten Position, und wobei die Mehrzahl von unverankerten Fenstern die Mehrzahl von geteilten Bildschirmaufnahmebildern umfasst.

13. Verfahren nach einem der Ansprüche 1-12, wobei das Anzeigen des Bildschirmaufnahmebilds in dem unverankerten Fenster Folgendes umfasst:
Verringern einer Größe jedes der Mehrzahl von Bildschirmaufnahmebildern, um eine Mehrzahl von Miniaturbildern der Mehrzahl von Bildschirmaufnahmebildern zu erhalten; und
Anzeigen der Mehrzahl von Miniaturbildern der Mehrzahl von Bildschirmaufnahmebildern jeweils in der Mehrzahl von unverankerten Fenstern.

14. Endgerät, umfassend: einen Prozessor (1110) und einen Speicher (1120); wobei in dem Speicher (1120) mindestens eine Anweisung gespeichert ist, und wobei der Prozessor (1110) dazu konfiguriert ist, wenn die mindestens eine Anweisung durch den Prozessor (1110) geladen und ausgeführt wird, das Verfahren zum Teilen von Bildschirmaufnahmebildern nach einem der Ansprüche 1-13 zu implementieren.

15. Computerlesbares Speichermedium, in dem mindestens eine Anweisung gespeichert ist, wobei die mindestens eine Anweisung dazu konfiguriert ist, durch einen Prozessor geladen und ausgeführt zu werden, um das Verfahren zum Teilen von Bildschirmaufnahmebildern nach einem der Ansprüche 1-13 zu implementieren.

## Revendications

1. Procédé de partage d'image de capture d'écran, comprenant :
l'exécution (201, 301, 701) d'un traitement de capture d'écran, en réponse à la réception d'une opération de capture d'écran, sur une première interface utilisateur d'un terminal, et l'obtention d'une pluralité d'images de capture d'écran ;
l'affichage (202, 302, 702) d'une pluralité de fenêtres flottantes (42, 43) sur une couche supérieure de la première interface utilisateur, et dans lequel la pluralité de fenêtres flottantes affiche la pluralité d'images de capture d'écran respectivement ;
la commutation (203, 304), en réponse à une première opération pour déclencher un affichage d'une seconde interface utilisateur, de la première interface utilisateur à la seconde interface utilisateur, et la pluralité de fenêtres flottantes étant affichées pendant un processus de commutation de la première interface utilisateur à la seconde interface utilisateur ;
en réponse à la réception d'un signal de sélection pour au moins deux de la pluralité d'images de capture d'écran affichées dans la pluralité de fenêtres flottantes, l'obtention d'au moins deux fenêtres flottantes sélectionnées à partir de la pluralité de fenêtres flottantes ;
en réponse à la réception d'une opération de glissement sur les au moins deux fenêtres flottantes sélectionnées, la commande aux au moins deux fenêtres flottantes sélectionnées de se déplacer en suivant une piste de glissement de l'opération de glissement (305, 707) ; et
le partage (204, 307, 708), en réponse à la fin de l'opération de glissement, des au moins deux images de capture d'écran à un objet cible correspondant à la seconde interface utilisateur.

2. Procédé selon la revendication 1, dans lequel le partage (204, 307, 708), en réponse à la fin de l'opération de glissement, des au moins deux images de capture d'écran à un objet cible correspondant à la seconde interface utilisateur comprend :
le partage des au moins deux images de capture d'écran à l'objet cible, en réponse aux au moins deux fenêtres flottantes qui sont dans une première zone (54) lorsque l'opération de glissement se termine.

3. Procédé selon la revendication 2, comprenant en outre :
le marquage (S306) de la première zone (54) dans la seconde interface utilisateur, dans un processus de commande des au moins deux fenêtres flottantes de se déplacer en suivant la piste de glissement de l'opération de glissement.

4. Procédé selon la revendication 3, dans lequel le marquage (S306) de la première zone dans la seconde interface utilisateur comprend :
l'affichage, en réponse à la piste de glissement de l'opération de glissement qui est supérieure à une seconde longueur, d'une icône de partage (55) sur la seconde interface utilisateur, dans lequel la première zone fait référence à une zone contenant l'icône de partage.

5. Procédé selon l'une quelconque des revendications 1 à 4, dans lequel après l'affichage (S202, S302, S702) d'une pluralité de fenêtres flottantes sur une couche supérieure de la première interface utilisateur, le procédé comprend en outre :
la commande (303, 703, 705), en réponse à une troisième opération agissant sur la pluralité de fenêtres flottantes, au terminal d'entrer dans un mode de partage d'images, et la pluralité de fenêtres flottantes étant dans un état de focalisation lorsque le terminal se trouve dans le mode de partage d'images.

6. Procédé selon la revendication 5, dans lequel la troisième opération est une opération de glissement supplémentaire, et la commande (303, 703, 705), en réponse à la troisième opération agissant sur la pluralité de fenêtres flottantes, au terminal d'entrer dans un mode de partage d'images comprend :
la commande au terminal d'entrer dans le mode de partage d'images, en réponse à la pluralité de fenêtres flottantes qui sont déplacées, sur la base de l'opération de glissement supplémentaire, vers une première position fixe lorsque l'opération de glissement supplémentaire se termine.

7. Procédé selon la revendication 6, dans lequel le procédé comprend en outre :
en réponse à la pluralité de fenêtres flottantes qui ne sont pas déplacées, sur la base de l'opération de glissement supplémentaire, vers la première position fixe lorsque l'opération de glissement supplémentaire se termine, le retour de la pluralité de fenêtres flottantes à une position d'origine (706).

8. Procédé selon l'une quelconque des revendications 1 à 7, dans lequel le procédé comprend en outre :
en réponse à la détection d'un signal d'opération tactile à doigts multiples, la détermination que l'opération de capture d'écran est reçue.

9. Procédé selon l'une quelconque des revendications 1 à 8, dans lequel la seconde interface utilisateur est une première interface d'affichage de contenu, la première interface d'affichage de contenu est configurée pour afficher au moins un d'un contenu social émis par un compte local et d'un contenu social émis par un contact associé au compte local, et le compte local est un compte d'utilisateur actuellement connecté à un client auquel la seconde interface utilisateur appartient ;
dans lequel le partage (204, 307, 708) des au moins deux images de capture d'écran à un objet cible correspondant à la seconde interface utilisateur comprend :
l'affichage d'une interface d'édition de contenu social, et l'interface d'édition de contenu social comprenant les au moins deux images de capture d'écran ; et
l'envoi, en réponse à la réception d'une opération de publication de contenu, d'un contenu social cible à un serveur cible, le serveur cible étant configuré pour transmettre le contenu social cible à un client cible, le client cible étant configuré pour afficher le contenu social cible sur une seconde interface d'affichage de contenu, et le contenu social cible comprenant les au moins deux images de capture d'écran.

10. Procédé selon l'une quelconque des revendications 1 à 9, dans lequel après l'affichage (202, 302, 702) d'une pluralité de fenêtres flottantes sur une couche supérieure de la première interface utilisateur, le procédé comprend en outre :
la sauvegarde d'au moins une de la pluralité d'images de capture d'écran en réponse à une quatrième opération agissant sur l'au moins une de la pluralité de fenêtres flottantes, dans lequel la quatrième opération est une opération de glissement vers le bas.

11. Procédé selon l'une quelconque des revendications 1 à 9, dans lequel après l'affichage (202, 302, 702) d'une pluralité de fenêtres flottantes sur une couche supérieure de la première interface utilisateur, le procédé comprend en outre :
l'effacement d'au moins une de la pluralité d'images de capture d'écran en réponse à une cinquième opération agissant sur l'au moins une de la pluralité de fenêtres flottantes, dans lequel la cinquième opération est une opération de glissement vers le haut.

12. Procédé selon l'une quelconque des revendications 1 à 9, dans lequel après le partage (204, 307, 708) de la pluralité d'images de capture d'écran à un objet cible correspondant à la seconde interface utilisateur, le procédé comprend en outre :
l'affichage de la pluralité de fenêtres flottantes à une première position, et la pluralité de fenêtres flottantes comprenant la pluralité d'images de capture d'écran partagées.

13. Procédé selon l'une quelconque des revendications 1 à 12, dans lequel l'affichage de l'image de capture d'écran dans la fenêtre flottante comprend :
la réduction d'une taille de chacune de la pluralité d'images de capture d'écran pour obtenir une pluralité d'images miniatures de la pluralité d'images de capture d'écran ; et
l'affichage de la pluralité d'images miniatures de la pluralité d'images de capture d'écran dans la pluralité de fenêtres flottantes respectivement.

14. Terminal comprenant : un processeur (1110) et une mémoire (1120) ; dans lequel la mémoire (1120) est stockée avec au moins une instruction, et le processeur (1110) est configuré pour, lorsque l'au moins une instruction est chargée et exécutée par le processeur (1110), mettre en œuvre le procédé de partage d'images de capture d'écran selon l'une quelconque des revendications 1 à 13.

15. Support de stockage lisible par ordinateur stocké avec au moins une instruction dans celui-ci, dans lequel l'au moins une instruction est configurée pour être chargée et exécutée par un processeur pour mettre en œuvre le procédé de partage d'images de capture d'écran selon l'une quelconque des revendications 1 à 13.
